(19) Europäisches Patentamt
European Patent Office
Office européen des brevets

(11) **EP 4 750 053 A1**

(12) **EUROPEAN PATENT APPLICATION**

(43) Date of publication:
**27.05.2026 Bulletin 2026/22**

(21) Application number: **24215031.6**

(22) Date of filing: **25.11.2024**

(51) International Patent Classification (IPC):
**H04N 19/107** (2014.01)     **H04N 19/159** (2014.01)
**H04N 19/176** (2014.01)

(52) Cooperative Patent Classification (CPC):
**H04N 19/107; H04N 19/159; H04N 19/176**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Axis AB**
**223 69 Lund (SE)**

(72) Inventor: **Cremon, Jonas**
**223 69 LUND (SE)**

(74) Representative: **AWA Sweden AB**
**Matrosgatan 1**
**Box 5117**
**200 71 Malmö (SE)**

Remarks:
Amended claims in accordance with Rule 137(2)
EPC.

(54) **ADAPTIVE INTRA REFRESH ENCODING OF A VIDEO STREAM**

(57)     A method (500) for intra refresh encoding of a video stream is provided. The method includes encoding (S510) the video stream using a first intra refresh pattern; determining (S520) that a time-variation of bits-per-frame for encoding the video stream using a second intra refresh pattern different from the first intra refresh pattern is lower than that for encoding the video stream using the first intra refresh pattern, and switching (S530) to encoding the video stream using the second intra refresh pattern. A corresponding device configured to perform the method is also provided, as well as a corresponding computer program and computer program product.

500

S510 — Encode the video stream using first pattern

S520 — Determine that the time-variation for a second, different pattern is lower than that of the first pattern

S530 — Switch to encoding the video stream using the second pattern

*Fig. 5A*

EP 4 750 053 A1

## Description

## Technical field

The present disclosure generally relates to the field of video coding. More in particular, the present disclosure relates to adaptive intra-refresh encoding of a video stream.

## Background

In contemporary video compression/encoding techniques, different types of video frames are used to utilize that e.g. the data required to decode one video frame may often be found at least partially in one or more other, already decoded video frames. Examples of such video frame types, such as used in e.g. the H.264 coding standard, are predicted frames (P-frames) and bidirectional predicted frames (B-frames), also referred to as inter frames. In addition, so-called intra frames (I-frames) that are self-contained and do not reference any other video frames are also provided. I-frames are often inserted at regular intervals in the encoded video stream to e.g. prevent errors introduced by multiple inter frames referencing each other (in a chain-like fashion) from growing indefinitely, and provides a way to, on a regular basis, "reset" the video stream. The use of I-frames may also help to prevent errors introduced due to for example packet loss or similar to remain in the decoded video stream over long time.

A common problem with the mixing of inter and intra frames in a video stream is however that each I-frame is likely to cause a bitrate spike, as each I-frame requires more bits to transfer compared to e.g. P- and/or B-frames. For low-latency video streaming, such bitrate spikes may be particularly undesirable, and encoders used for such applications may thus be forced to avoid regularly introducing I-frames into their output encoded video stream, which may in turn cause e.g. unbounded errors due to inter frame encoding to become worse, and for e.g. artifacts caused by packet loss to remain on screen, over time.

One solution to this problem is to instead spread each I-frame over a plurality of video frames, by encoding only a part (e.g. only one or a few macroblocks) of each video frame as self-contained (referred to as I-blocks), and to change what part of each video frame that is encoded as I-blocks between consecutive video frames. Such a technique is referred to as "intra refresh encoding", wherein an intra refresh pattern is used to define how the part of the video frames encoded as I-blocks moves with time. The pattern is often periodic, such that the same part of an image will once again be encoded as an I-block every $N$ video frames, where $N$ may be referred to as the period of such intra refresh. As each video frame will then include both I-blocks and blocks encoded using prediction (such as P-blocks and/or B-blocks), the bitrate is kept more constant over time.

However, especially for low-latency applications, there may still be oscillatory behavior in the bitrate (e.g. in the number of bits-per-frame) even if using such intra refresh encoding.

## Summary

The present disclosure aims at further developing contemporary technology, and to provide a solution that at least partially overcomes the above-mentioned issues therewith.

According to a first aspect of the present disclosure, there is provided a (computer-implemented) method for intra refresh encoding of a video stream. The method includes encoding the video stream using a first intra refresh pattern. The method includes determining that a time-variation of bits-per-frame for encoding the video stream using a second intra refresh pattern different from the first intra refresh pattern is lower than that for encoding the video stream using the first intra refresh pattern. The method also includes switching to encoding the video stream using the second intra refresh pattern (instead of the first intra refresh pattern).

The envisaged solution has the benefit that it allows to change the used intra refresh pattern based on the current scene, and thus provides a more flexible solution in which the more optimal intra refresh pattern in terms of bitrate variation can be selected and used such that the resulting number of bits required to encode each frame is kept more constant over time. Phrased differently, the envisaged solution helps to reduce oscillatory behavior in bits-per-frame, and is thus particularly suitable for low-latency applications such as low-latency video streaming, wherein it may be of great interest that a time elapsing between an event is captured and the same event is made visible to e.g. an operator on a screen (or made available to a computer system configured to analyze the video stream and e.g. detect the event) is kept as small as possible.

In one or more embodiments of the method, the first and second intra refresh pattern may be a horizontal intra refresh pattern and a vertical intra refresh patten, respectively, or vice versa. Phrased differently, the first pattern may be a horizontal pattern and the second pattern is then a vertical pattern, or the first pattern may be a vertical pattern and the second pattern is then a horizontal pattern. Switching between horizontal and vertical patterns may for example be useful for a camera that are expected to sometimes rotate 90 degrees, such as e.g. a body-worn camera, a drone camera, or similar cameras that are located on objects that are non-stationary and wherein the camera is e.g. tilted and/or rotated, by result of the object on which the camera is mounted being tilted and/or rotated, and/or by result of the camera being tilted and/or rotated with respect to the object, such as by use of a suitable camera gimbal or similar. A 90-degree rotation may for example be caused by moving from a landscape to a portrait mode, or similar.

In one or more embodiments of the method, the first and second intra refresh patterns may be two orthogonal intra refresh patterns. Here, "orthogonal" means that if one pattern means sweeping a region in a first direction across the image(s), a pattern orthogonal to such a pattern instead includes sweeping the region in a direction oriented orthogonally (i.e. perpendicularly) to the first direction. Using an orthogonal set of patterns may provide a large difference in oscillatory behavior, especially in scenes that are e.g. of different complexity (in terms of encoding efficiency) only in one direction, in which an improvement when switching to a new pattern may be large if this new pattern is orthogonal to the previously used pattern.

In one or more embodiments of the method, the first and second intra refresh patterns may be two opposite diagonal intra refresh patterns. For example, the first pattern may extend from e.g. a lower-left to a top-right corner of an image, and the second pattern may extend from e.g. a top-left to a bottom-right corner of the image, or similar. The use of a set of such patterns may be beneficial for example in scenes wherein the complexity (in terms of encoding efficiency) remains more constant along one diagonal of the image than the other diagonal, and similar.

In one or more embodiments of the method, the first and second intra refresh patterns may form part of a plurality of different intra refresh patterns, and the operation of determining may include evaluating the resulting time-variation of bits-per-frame for each intra refresh pattern of the plurality of (different) intra refresh patterns. Using a plurality of patterns to chose from may improve the chances of finding a most optimal pattern for a current scene.

In one or more embodiments of the method, the second intra refresh pattern may be determined to be the intra refresh pattern (out of the plurality of different intra refresh patterns) that has a smallest time-variation of bits-per-frame for encoding the video stream. This may provide the largest possible reduction of bits-per-frame variance over time, given the available set of different patterns.

In one or more embodiments of the method, the time-variation of bits-per-frame may be defined in terms of a bits-per-frame variance, bits-per-frame standard deviation and/or bits-per-frame oscillation amplitude.

In one or more embodiments of the method, the switching (to the second intra refresh pattern) may be performed in response to the determining. Phrased differently, the method may include to first determine that the second pattern would be better than the first pattern, and then switch to using the second pattern. Such determining may for example be based on statistical data, on numerical models/predictions, and/or e.g. by evaluating the second pattern in parallel with the first pattern, using e.g. a separate encoder, to see that the second pattern is likely to perform better for the current scene that is captured in the video stream that is to be encoded.

In one or more embodiments of the method, the determining and switching may be performed in response to detecting that the time-variation of bits-per-frame for encoding the video stream using the first intra refresh pattern exceeds a threshold value. Phrased differently, the method may be such that starting to determining that the second pattern would result in an improvement and switching to the second pattern is triggered in response to detecting that the first pattern is performing at a less-than-desired level. The threshold value may for example correspond to a threshold variance in bits-per-frame, in packet size, and similar, and the first pattern exceeding such a threshold variance may trigger the switch to the second pattern. Of course, as envisaged herein, "exceeds a threshold value" also includes/covers "goes below a threshold value", if the metric used to evaluate the performance of a pattern is instead formulated such that it decreases with improved performance and increases with reduced performance of the pattern.

In one or more embodiments of the method, the determining may include evaluating, in response to the detecting (that the threshold value is exceeded), the time-variation of bits-per-frame for each of the first and second intra refresh patterns during one or more finite time intervals. The determining (that the second pattern is better) may be performed by detecting that the time-variation of bits-per-frame for the second intra refresh pattern is lower than that for the first intra refresh pattern during at least one of the one or more finite time intervals. For example, the determining may include to use for example the first pattern to encode X seconds, minutes, etc., of the video stream, and to use the second pattern to encode e.g. Y seconds, minutes, etc., of the video stream, and to then compare which pattern that resulted in the lowest time-variation. As envisaged herein, X may or may not equal Y, and the part of the video stream encoded using the first pattern may or may not be the same part of the video stream encoded using the second pattern. For example, the method may include to first encode a first part of the video stream using the first pattern, and to then encode a second part (different from the first part) of the video stream using the second pattern, or vice versa. If e.g. having access to multiple encoders, or to an encoder capable of encoding multiple streams in parallel, a same part of the video stream may be analyzed/evaluated for both patterns, and similar.

According to a second aspect of the present disclosure, there is provided a device. The device includes processing circuitry. The processing circuitry is configured to encode a video stream using a first intra refresh pattern. The processing circuitry is configured to determine that a time-variation of bits-per-frame for encoding the video stream using a second intra refresh pattern different from the first intra refresh pattern is lower than that for encoding the video stream using the first intra refresh pattern. The processing circuitry is also configured to switch to encoding the video stream using the second intra refresh pattern. The device is thus configured to perform the operations of the method of the first aspect, or any example embodiment thereof disclosed herein. As used herein, and as already exemplified above, encoding the video stream using the first pattern and the second pattern may include encoding a same part of the video stream using each of the patterns, or to encode different parts of the video stream using the patterns.

In one or more embodiments of the device, the device may be a monitoring camera, such as a camera used for surveillance and/or monitoring of a scene. The camera may for example be configured to be mounted on a stationary object such as a building. The camera may be "static" in the sense that its orientation resulting field-of-view (FOV) is fixed once mounted, or the camera may be "dynamic" in the sense that its orientation and/or FOV can be changed upon request, e.g. by changing a lens arrangement, panning, tilting and/or zooming the camera, or similar.

In one or more embodiments of the device, the device may be a body-worn camera or a drone camera. For such camera types, which are expected to move and change their orientation/FOV with time, the envisaged solution may be particularly useful, as the movement and/or orientation/FOV of the camera may affect what the most effective intra refresh pattern is in terms of time-varying bits-per-frame.

According to a third aspect of the present disclosure, there is provided a computer program. The computer program includes computer code that, when run on processing circuitry of a device (such as the device of the second aspect or any example embodiment thereof disclosed herein), causes the device to encode a video stream using a first intra refresh pattern; determine that a time-variation of bits-per-frame for encoding the video stream using a second intra refresh pattern different from the first intra refresh pattern is lower than that for encoding the video stream using the first intra refresh pattern; and switch to encoding the video stream using the second intra refresh pattern. The computer program is thus such that it causes the device to perform the operations of the method of the first aspect, or any example embodiment thereof disclosed herein.

According to a fourth aspect of the present disclosure, there is provided a computer program product. The computer program product includes a computer-readable storage medium on which the computer program of the third aspect is stored. As used herein, the computer-readable storage medium may e.g. be non-transitory, and be provided as e.g. a hard disk drive (HDD), solid state drive (SSD), USB flash drive, SD card, CD/DVD, and/or as any other storage medium capable of non-transitory storage of data. In other embodiments, the computer-readable storage medium may be transitory and e.g. correspond to a signal (electrical, optical, mechanical, or similar) present on e.g. a communication link, wire, or similar means of signal transferring, in which case the computer-readable storage medium is of course more of a data carrier than a data storing entity.

Other objects and advantages of the present disclosure will be apparent from the following detailed description, the drawings and the claims. Within the scope of the present disclosure, it is envisaged that all features and advantages described with reference to e.g. the method of the first aspect are relevant for, apply to, and may be used in combination with also the device of the second aspect, the computer program of the third aspect, and the computer program product of the fourth aspect, and vice versa.

**Brief description of the drawings**

Exemplifying embodiments will be described below with reference to the accompanying drawings, on which:

Figure 1A schematically illustrates an example of an intra refresh progression using a vertically swept intra refresh pattern;

Figure 1B schematically illustrates an example of an intra refresh progression using a horizontally swept intra refresh pattern;

Figure 2A schematically illustrates an example image of an scene as envisaged herein, including regions of varying complexity in terms of encoding efficiency;

Figure 2B schematically illustrates example divisions of the image of Figure 2A into a plurality rows/-columns of macroblocks;

Figure 3A schematically illustrates an example time-varying packet size (bits-per-frame) for encoding the image of Figure 2A/2B using a vertically swept intra refresh pattern;

Figure 3B schematically illustrates an example time-varying packet size (bits-per-frame) for encoding the image of Figure 2A/2B using a horizontally swept intra refresh pattern;

Figure 4 schematically illustrates an example of how to define an orientation of a sweeping-direction of an intra refresh pattern as envisaged herein;

Figures 5A, 5B and 5C schematically illustrate flowcharts of various example embodiments of a method for intra refresh encoding of a video stream as envisaged herein;

Figures 6A and 6C schematically illustrate components and functional blocks of various example embodiments of a device as envisaged herein, and

Figure 7 schematically illustrates example embodiments of a computer program, computer program product and computer-readable storage medium as envisaged herein.

In the drawings and Figures thereon, like reference numerals will be used for like elements unless stated otherwise. Unless explicitly stated to the contrary, the drawings show only such elements that are necessary to illustrate the example embodiments, while other elements, in the interest of clarity, may be omitted or merely suggested. As illustrated in the Figures, the (absolute or relative) sizes of elements and regions may be exaggerated or understated vis-à-vis their true values for illustrative purposes and, thus, are provided to illustrate the general structures of the embodiments.

**Detailed description**

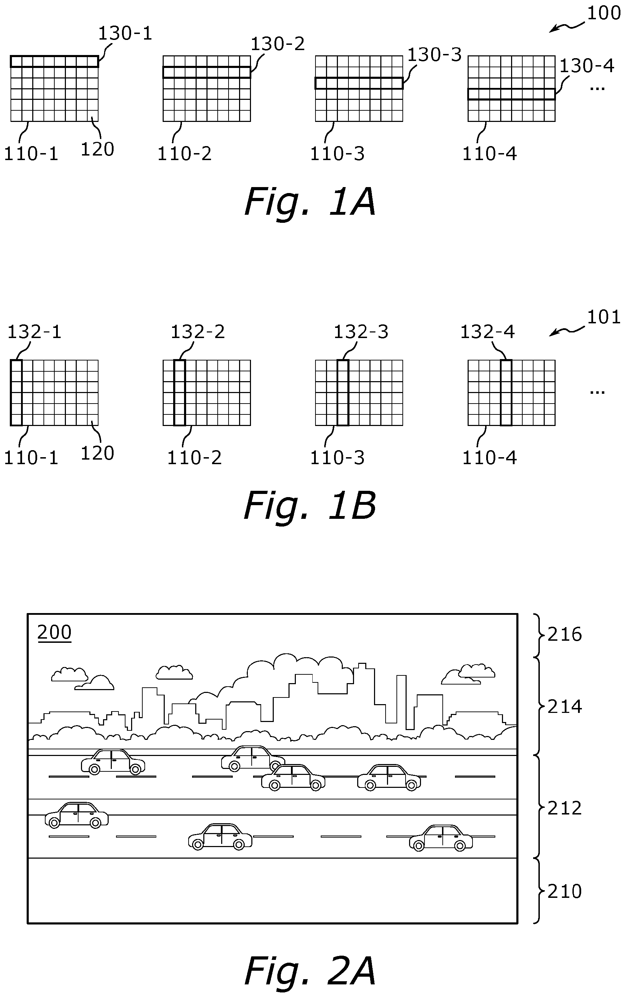

Examples of intra refresh encoding of a video stream will now be described in more detail with reference to Figures 1A and 1B.

Figure 1A schematically illustrates video frames 110-1, 110-2, 110-3, 110-4, ... of a video stream 100. The video stream 100 may include a fixed number of such video frames, such as M frames in total, or be a video stream for which the number of total video frames is increased indefinitely as more and more images, and thus more and more video frames, to be encoded are added with time.

Each video frame 110-1 to 110-4 is divided into a plurality of macroblocks 120, where a macroblock may for example be a collection of a predefined number of image pixels, such as e.g. $2\times2$, $4\times4$, 8x8, $16\times16$, and similar, pixels. In this particular example, the macroblocks are non-overlapping and together form a grid of macroblocks spanning the whole image. In the first video frame 110-1, a first (i.e. top) row 130-1 of macroblocks are encoded as I-blocks, while the other macroblocks not belonging to the row 130-1 are encoded as inter blocks, e.g. as P-blocks and/or B-blocks. The part of each video frame/image that are encoded as I-blocks may be referred to as an intra refresh region, and in the video frame/image 110-1, the intra refresh region thus corresponds to the macroblocks of the row 130-1.

In the second video frame 110-2, the intra refresh region instead corresponds to a second row 130-2, i.e. the macroblocks belonging to the row 130-2 are encoded as I-blocks while the other blocks of the second video frame 110-2 are instead encoded as inter blocks. Similarly, in the third video frame 110-3, the region is the (third-from-top) row 130-3. In the fourth video frame 110-4, the region is the (fourth-from-top) row 130-4. The encoding continues similarly for the next video frames (not shown) of the video stream 100, and the region is swept such that it move down one row per video frame. After the last row of a video frame, i.e. to the J:th video frame if there are $J$ rows of macroblocks in each video frame/image, the region is once again moved to the top row, i.e. such that the region of the J:th video frame corresponds to the top row of macroblocks in this video frame/image. Phrased differently, the pattern is repeated every $J$ video frames, and the region is thus the same in each pair of video frames $j$ and $j + J$. In Figure 1A, the intra refresh pattern is swept vertically, as the location of the region of I-blocks is moved one row down during each period of the repeating pattern. The pattern of Figure 1A may be referred to as a "vertically swept pattern", "vertical pattern", or similar.

Figure 1B schematically illustrates another possible intra refresh pattern for a same or similar video stream 101, wherein the pattern is instead such that the region corresponds to a column of macroblocks 120 for each video frame/image 110-1 to 110-4 (or 110-M). For example, the region of the first video frame 110-1 corresponds to a left-most column 132-1 of macroblocks, the region of the second video frame 110-2 corresponds to a next column 132-2 of macroblocks, the region of the third video frame 110-3 to a yet next column 132-3, and the region of the fourth video frame 110-4 to a column 132-4, and so on. In the example of Figure 1B, the intra refresh pattern is thus such that the region is moved horizontally, i.e. the pattern is "swept horizontally", a "horizontal pattern", and similar. If there are K rows of macroblocks in each video frame/image, the pattern is repeated every K video frames, as e.g. the region of the k:th video frame will correspond to a same column as that of the (k + K):th video frame.

Figure 2A schematically illustrates an example image 200 of an example scene, here in the form of a highway in front of a city. In the scene depicted in the image 200, the highway extends horizontally, which also applies to the city in the background. The scene and image 200 may be divided into horizontal regions of different complexity (in terms of encoding efficiency). For example, a first such region 210 includes mostly static content (such as grass), and may be assumed to be less complex in terms of encoding efficiency due to its static/homogenous content. A second region 212 includes the highway, which maybe expected to be more complex to encode efficiently due to the presence of both the road/lanes of the highway as well as multiple vehicles, wherein the positions of the vehicles are likely to change between subsequent video frames. A third region 214 corresponds to a part of the scene in the image 200 that captures the distant city, and maybe expected to be of moderate complexity in terms of encoding efficiency, as the city and its surrounding may be intricate although perhaps not dynamically changing. A fourth region 216 corresponds to the sky above the city, and may be considered as less complex to encode due to being mostly static and with high homogeneity. Of course, there may be clouds and similar present, but it may be assumed that e.g. a shape and/or position of such clouds remain fairly constant over at least a finite number of consecutive video frames. To avoid having to insert full I-frames at regular intervals, encoding of the image 200 (and video stream of the scene depicted in the image 200) may be performed using intra refresh encoding as described earlier herein.

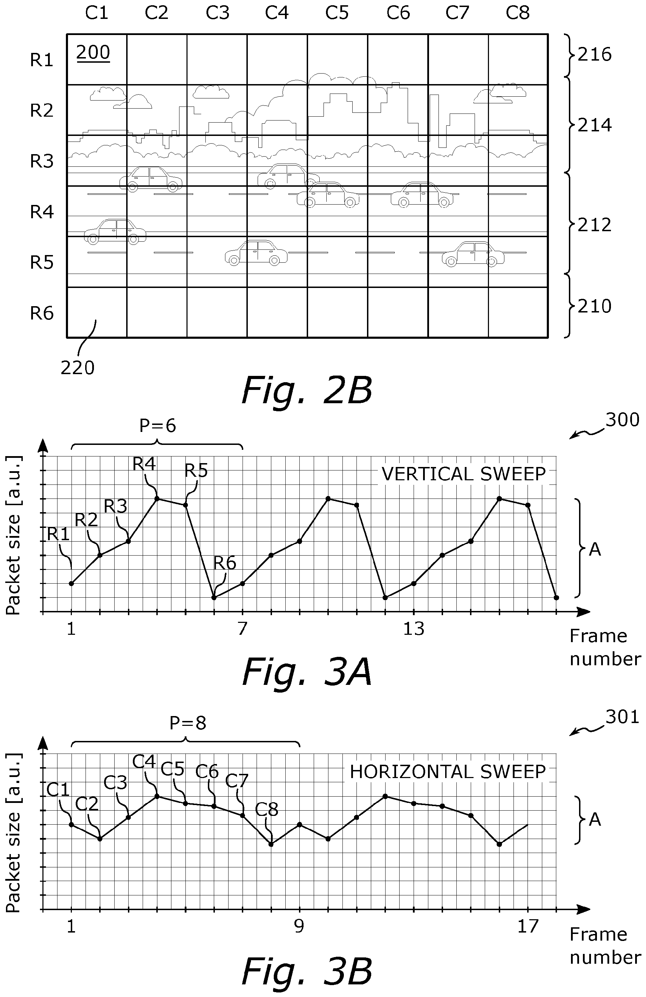

Figure 2B schematically illustrates how the image 200 (and any other image of the video stream) may be divided into macroblocks 220, wherein in this particular example the macroblocks form a grid of macroblocks, such that one may define a plurality of rows and/or columns of macroblocks. In the particular example of Figure 2B, for illustrative purposes only, there are a total of six rows R1-R6 and a total of eight columns C1-C8 of macroblocks available. Of course, in other examples, the number of rows and/or columns may be different than those shown in Figure 2B, and may for example depend on the size of each macroblock, the size, aspect ratio/-proportions of the images, and similar.

Figure 3A schematically illustrates an example plot 300 of how packet size (i.e. bits-per-frame) resulting from attempting to encode the image 200 using a vertically swept intra refresh pattern (such as that shown in Figure 1A). varies over time, i.e. how pack size depends on the number of the (video) frame considered. For the first video frame, the intra refresh region corresponds to the first row R1, and results in a rather low packet size due to the first row R1 corresponding to the rather low complexity of the region 216. For the second video frame, the region has moved to the second row R2, that corresponds to the moderate complexity region 214. The same applies to the second video frame, in which the region has moved to the third row R3. The complexity of the second and third video frames are thus a bit above that of the first video frame. For the fourth and fifth video frames, the region corresponds to the fourth and fifth row R4 and R5, respectively, which in turn corresponds to the more complex region 212 of the image 200 depicting the highway. Consequently, the packet sizes for video frames four and five are larger than those of the second and third video frames. Finally, for the sixth video frame in which the region has moved to the sixth row R6, the complexity is once again low due to the corresponding lower-complexity region 210 of the image 200/scene, and the resulting packet size is thus at the level of (or even lower) than that of the first video frame again. As there are six rows of macroblocks in total, the intra refresh pattern has a periodicity of P = 6 in this example, as the region will move back to the top row R1 for the seventh frame, and as the region will be the same for each $j$ and $j$ + 6 video frames. This is visible from the plot 300, as the packet size as a function of video frame number appears to be periodic with a period length of P = 6 video frames. Due to the rather different complexities in terms of encoding efficiency between the different rows and their corresponding regions of the image 200/scene, an amplitude A of the oscillatory packet size (over time) is rather substantial, and will likely result in a non-constant (and often rather large) latency as each video frame will provide different-sized packets due to the different complexity of encoding each intra refresh region.

The present disclosure envisages a solution to such a problem, in which it is evaluated and determined whether there are one or more other intra refresh patterns that results (or would result) in a lower time-variation of bits-per-frame (i.e. to a smaller amplitude $A$), and to select such an intra refresh pattern instead of the (in this example) vertical intra refresh pattern when encoding the video stream.

Figure 3B schematically illustrates a plot 301 of the packet size (i.e. bits-per-frame) as a function of video frame number for one such second pattern, namely a horizontally swept intra refresh pattern (such as that shown in Figure 1B). Here, the region is not moved row-by-row, but instead column-by-column. For the first video frame, the region corresponds to the first column C1. The complexity of the first column C1 is average, as the first column C1 includes image content belonging to all of the different (horizontal) regions 210, 212, 214 and 216 as described earlier herein. For example, in the column C1, there is included both part of the sky/clouds (region 216), part of the city (region 214), part of the highway (212), and part of the (static) foreground (region 210). The same applies also to each of the other columns C2 to C8. Consequently, although the complexity is not exactly the same for each column due to e.g. one column including more vehicles than one or more other columns, more contrast between buildings and clouds, more different buildings, etc., a difference in complexity with regards to encoding efficiency between the columns C1 to C8 is likely lower than that between the rows R1 to R6. Consequently, as can be seen in the plot 301, the horizontally swept intra refresh pattern also provides a somewhat oscillatory behavior, i.e. a non-zero time-variation in bits-per-frame, but with an amplitude A that is smaller than that of the vertically swept intra refresh pattern described with reference to Figure 3A. It can also be seen that due to there being eight columns in total, the period length of the oscillatory behavior is P = 8, i.e. the packet size as a function of video frame number is approximately for every $j$:th and ($j$ + 8):th video frame. In summary, for the particular scene depicted in image 200, switching from a first (vertical) intra refresh pattern to a second (horizontal) intra refresh pattern thus results in a reduced time-variation of bits-per-frame (i.e. in a lower amplitude $A$), and thus also results in a more even pack size over time and a more stable latency, resulting in a more improved experience for e.g. an operator watching the decoded video stream.

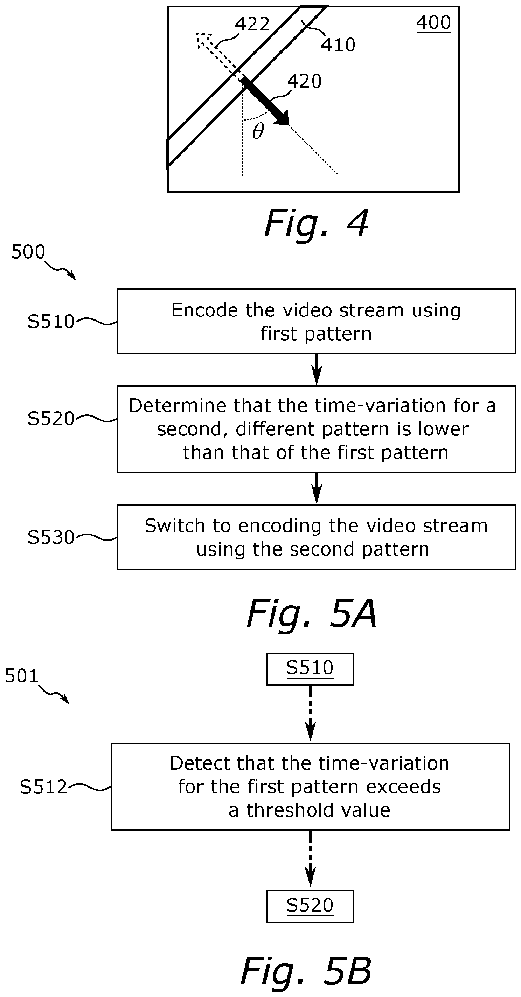

Figure 4 schematically illustrates how, as envisaged herein, an intra refresh pattern may be defined in terms of in what direction the region is swept/moved between consecutive video frames. In an image 400 to be encoded, a region of I-macroblocks (I-blocks) 410 is oriented such that it has a primary direction of extension, here from a lower-left to an upper-right. Perpendicular to this primary direction of extension, a sweeping direction 420 is defined, and forms an angle $\Theta$ with a vertical

direction of the image 400. The direction 420 may be referred to as the sweeping direction, propagation direction, and similar, of the intra refresh pattern. Of course, the region 410 may also be swept in a direction 422 opposite to the direction 420, as generally envisaged herein. As envisaged herein, the angle $\theta_n$ for an n:th intra refresh pattern may be used to define the pattern compared to one or more other patterns $n' \neq n$, as these other patterns will have other angles $\theta_{n' \neq n}$. For example, the vertically swept intra refresh pattern of Figures 1A and 3A may be defined as/by $\theta_1 = 0$ degrees, and the horizontally swept intra refresh pattern of Figures 1B and 3B may be defined as $\theta_2 = 90$ degrees (or $\pi/4$ radians). Two patterns whose angels $\theta_n$ and $\theta_n$, differ by 90 degrees may be referred to as two orthogonal intra refresh patterns, and similarly. A pattern for which $\theta = 0$ may be referred to as a vertical intra refresh pattern, and a pattern for which $\Theta = 90$ degrees may be referred to as a horizontal intra refresh pattern, and similar. As envisaged herein, two patterns (such as the first and second patterns) may not necessarily differ by 90 degrees, but any finite angular difference can be used as long as $\theta_n \neq \theta_{n' \neq n}$.

Figure 5A schematically illustrates a flowchart of an example embodiment of a method 500 for intra refresh encoding of a video stream as envisaged herein, which make use of the above-made observations. As part of an operation S510, the method 500 includes encoding the video stream using a first intra refresh pattern. As part of an operation S520, the method 500 includes determining that the time-variation of bits-per-frame for encoding the video stream using the second intra refresh pattern is lower than that for encoding the video stream using the first intra refresh pattern. As part of an operation S530, the method 500 includes switching to encoding the video stream using the second intra refresh pattern. As envisaged herein, operation S530 maybe performed in response to operation S520. In other examples, operation S530 may be performed before or simultaneously with operation S520. For example, in some example embodiments, it may first be determined that switching to the second pattern would reduce the time-variation, and the switching to the second pattern is made in response to such a determination. In other example embodiments, switching to the second pattern may be made before it is determined that the second pattern is "better" (in terms of time-variance) than the first pattern. For example, switching to the second pattern may be made to see whether it performs better, and if it does the video encoding may proceed with using the second pattern instead of the first pattern. If it instead turns out that the second pattern performs worse (in terms of time-variation) than the first pattern, the method 500 may include switching back to the first pattern, or to some other pattern different from both the first and second patterns, again/instead.

As envisaged herein, to determine/evaluate a time-variation of bits-per-frame for a particular intra refresh pattern, one or more suitable metrics may be used. One example of such a metric may be obtained by performing frequency analysis of the bits-per-frame (e.g. packet size) as a function of time, and by studying an amplitude or amplitudes of one or more major frequency components. For example, in Figure 3A, the plot 300 may be approximated as a sinusoidal of a fundamental frequency, and with some additional higher-frequency components. The time-variation may be assumed to be represented by the amplitude of the frequency component corresponding to such a fundamental frequency, and e.g. provide an indication of the amplitude A. For the plot 301 of Figure 3B, the frequency may be different (as there are eight columns instead of six rows), but the amplitude corresponding to such a fundamental frequency will likely be lower than that of the plot 300, and thus serve as an indication that the (second) pattern used for Figure 3B is better in terms of time-variation of bits-per-frame than the (first) pattern used for Figure 3A.

In other examples, statistical analysis may be used to obtain a suitable such metric. For example, an average packet size and standard deviation/variance for this average may be obtained by collecting data on how packet size varies with time, and the standard deviation (or variance) may be used as a measure of the time-variation of the bits-per-frame. If once again using Figures 3A and 3B and plots 300 and 301 as examples, an average packet size may be approximately the same for both plots 300 and 301, but a variance (or standard deviation) is likely to be less for the plot 301 as the pack size values swing less around the average in plot 301 than in plot 300, based on which it maybe determined that the (second) pattern used for Figure 3B performs better in terms of (low) time-variation than that for Figure 3A. Other examples of how to define and compare the time-variation of bits-per-frame for different intra refresh patterns are of course also possible, and all envisaged as being usable within the context of the present disclosure.

For example, for a set of measurements/values of packet rate R[m] as a function of video frame number m ∈ [1, M], a variance may be calculated as

$$\sigma^2 = \frac{1}{M} \sum_m (R[m] - \mu)^2,$$

where $\mu$ is the average packet rate obtained as

$$\mu = \frac{1}{M} \sum_m R[m],$$

and where the corresponding (biased) standard deviation is obtained as $\sigma = \sqrt{\sigma^2}$. In other examples, an unbiased variance may instead be used, obtained by replacing the term 1/M in the expression for $\sigma^2$ with Bessel's correction 1/(M - 1). One may either use a corrected sample standard deviation (obtained by taking the square root of $\sigma^2$ with Bessel's correction), or by defining an unbiased sample standard deviation based on an assumed probability distribution for the values of $R[m]$, in accordance with contemporary knowledge.

Figure 5B schematically illustrates an additional example embodiment of a method 501, such as an embodiment of the method 500, that includes the operations S510, S520 and S530 but with the addition that the determination (S520) and switching (S530) maybe performed in response to an operation S512 of first detecting that the time-variation for the first intra refresh pattern (such as established by any suitable metric as described above) exceeds a threshold value. For example, the threshold value may correspond to an amplitude value $A_{max}$, and operation S512 may include detecting that $A > A_{max}$ (wherein $A$ may e.g. be obtained by performing frequency analysis, such as Fourier-analysis, Laplace-analysis, Z-transform analysis, and similar, of e.g. the values $R[m]$). If using e.g. standard deviation and/or variance as a metric of time-variation, the threshold value may be e.g. a standard deviation value $\sigma_{max}$, and operation S512 may include detecting that a standard deviation $\sigma$ for the packet size is such that $\sigma > \sigma_{max}$. Similarly, if using variance as a metric for time-variation, the threshold value may e.g. be defined as $\sigma_{max}^2$, and operation S512 may include detecting that $\sigma^2 > \sigma_{max}^2$.

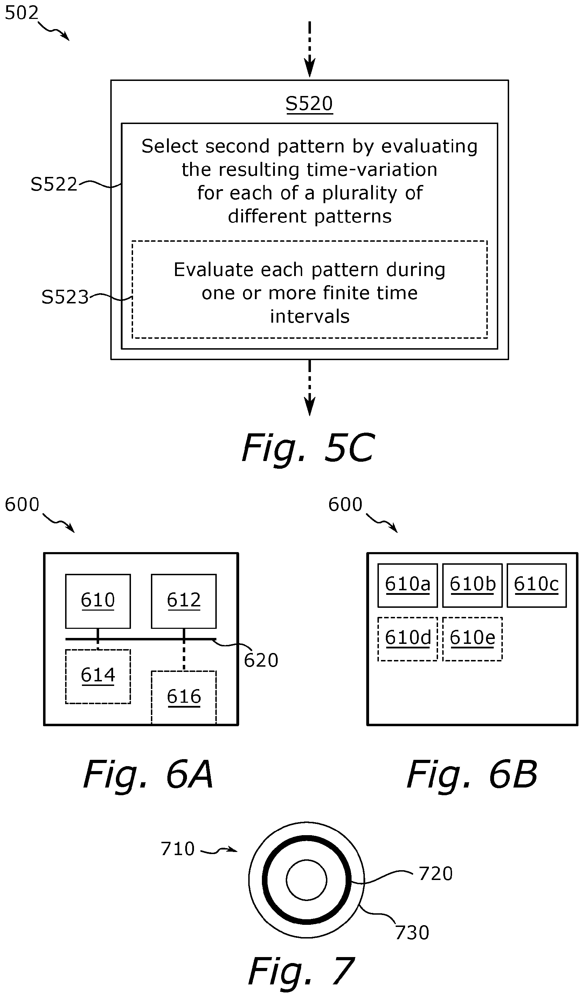

Figure 5C schematically illustrates an additional example embodiment of a method 502, such as an embodiment of the method 500 or 501, wherein the operation S520 includes a sub-operation S522 of selecting the second intra refresh pattern by evaluating a plurality of different intra refresh patterns (in terms of their time-variation performance). For example, operation S522 may include to evaluate a same part or different parts of the video stream for different patterns. For example, a same part of the video stream may be encoded using different patterns. As another example, different parts of the video stream may be encoded using the different patterns. If for examples there is access to multiple encoders or to at least an encoder capable of encoding multiple streams in parallel, a same part of the video stream may be encoded using each of the plurality of different patterns. In other examples, each of several different (e.g. consecutive) parts of the video stream may be encoded using a different pattern. After having evaluated the different patterns, the second pattern may for example be selected as the pattern that results (out of the available patterns) in the lowest time-variation of bits-per-frame. In other examples, other preferences may be used. For example, it may not necessarily be optimal to select the pattern resulting in the lowest time-variation, if this pattern at the same time results in a higher than desired average packet size. In such a situation, there may be one or more other patterns that results in e.g. a somewhat similar (but higher) time-variation, but that results in a lower average packet size than the pattern resulting in the lowest time-variation. In this situation, it may be desirable to instead select one of these one or more patterns as the second intra refresh pattern.

The method 502 may optionally include also an operation S523 that includes evaluating each intra refresh pattern (of the plurality) during one or more finite intervals. For example, each pattern may be evaluated for a total of $L_n$ video frames, where n is the index of the respective pattern. In some examples, $L_n$ may be equal for all $n$, while in other examples $L_n$ may be different for different $n$. Likewise, all patterns may be evaluated based on a same part of the video stream, or the patterns may be evaluated based on different parts of the video stream, as described earlier herein. For example, in some embodiments, it is envisaged that each pattern may be evaluated (for a same or different part of the video stream) during e.g. X seconds, minutes, or similar, after which comparison is made to see e.g. which pattern that resulted in the lowest time-variation, lowest combined time-variation and average packet size (or bits-per-frame), out of the plurality of patterns, and this pattern may then be selected as the second pattern, conditioned on that it performs better than the already tried first pattern. In other examples, multiple test-runs may be performed, e.g. such that each pattern is evaluated for different lengths and/or parts of the video stream, after which comparison is made to establish which pattern (if any) to select as the second pattern.

As already described herein, the operation S520 of the method 502 may be triggered by the operation S512, i.e. by detecting that the performance of the first pattern is below a minimum expectation, e.g. by some metric of time-variation for the first pattern exceeding the threshold value.

Envisaged herein is also to provide a device capable of performing at least the above-described method 500 (and optionally one or more of the methods 501 and 502), as well as a computer program and computer program product for distribution and execution of such a method/methods.

Figure 6A schematically illustrates one or more examples of a device 600 for performing a method as envisaged herein, i.e. a device (such as a camera) configured to perform the method 500 (and/or 501 and/or 502) described with reference to Figure 5A (and/or 5B and/or 5C). The device 600 includes at least a processor (or "processing circuitry") 610 and optionally a memory 612. As used herein, a "processor" or "processing circuitry" may for example be any combination of one or more of a suitable central processing unit (CPU), multiprocessor, microcontroller ($\mu$C), digital signal processor (DSP), application-specific integrated circuit (ASIC), field-programmable gate-array (FPGA), graphics processing unit (GPU), etc., capable of executing software instructions stored in the memory 612. The memory 612 may be external to the processor 610, or may be internal to the processor 610. As used herein, a "memory" may be any combination of random-access memory (RAM) and read-only memory (ROM), or any other kind of memory capable of storing the instructions. The memory 612 contains (i.e. stores) instructions that, when executed by the processor 610, cause the device 600 to perform a method as described herein (i.e. the method 500 or any embodiments thereof). The device 600 may further include one or more additional items 614 which may, in some situations, be useful for performing the method. In some example embodiments, the device 600 may for example be a (video) camera, such as a (video) monitoring camera, body-worn camera, drone camera, etc., and the additional item(s) 614 may then include e.g. an image sensor and for example one or more lenses for focusing light from a scene on the image sensor, such that the monitoring camera may capture images of a scene as part of performing the envisaged method. The additional item(s) 614 may also include e.g. various other electronics components needed for capturing the scene, e.g. to properly operate the image sensor and/or lenses as desired. Performing the method in a monitoring camera may be useful in that the processing is moved to "the edge", i.e. closer to where the actual scene is captured compared to if performing e.g. image analysis somewhere else (such as at a more centralized processing server or similar).

The device 600 may for example be connected to a network such that the results from performing the method may be transmitted to e.g. a user/operator, and/or to another device such as a server, or similar. For this purpose, the device 600 may include a network interface 616, which may be e.g. a wireless network interface (as defined in e.g. any of the IEEE 802.11 or subsequent standards, supporting e.g. Wi-Fi) or a wired network interface (as defined in e.g. any of the IEEE 802.3 or subsequent standards, supporting e.g. Ethernet). The network interface 616 may for example also support any other wireless standard capable of transferring encoded video, such as e.g. Bluetooth or similar. The various components 610, 612, 614 and 616 (if present) may be connected via one or more communication buses 620, such that these components may communicate with each other, and exchange data as required.

The device 600 may for example be a monitoring camera mounted or mountable on a building or other support structure, e.g. in form of a PTZ-camera or e.g. a fisheye-camera capable of providing a wider perspective of the scene, or any other type of monitoring/surveillance camera. The device 600 may for example be a body camera, action camera, dashcam, or similar, suitable for mounting on persons, animals and/or various vehicles, or similar. The device 600 may for example be a drone or drone camera, capable of obtaining images from above. The device 600 may for example be a smartphone or tablet which a user can carry and film a scene. In any such examples of the device 600, it is envisaged that the device 600 may include all necessary components (if any) other than those already explained herein, as long as the device 600 is still able to perform the method 500 or any embodiments thereof as envisaged herein. The various components of the device 600 may in some examples be further configured to implement the method operations as described herein (such at least S510, S520 and S530). In other examples, the device 600 maybe distributed across multiple physical and/or logical entities, to form e.g. a computer system or similar, wherein two or more of the operations (and/or two or more different suboperations of a same operation) may be performed on/by different physical and/or logical entities, e.g. as part of a distributed computing process or similar.

Figure 6B schematically illustrates one or more embodiments of the device 600 in terms of a number of functional/computing blocks 610a, 610b, 610c. Each such block 610a-610C is responsible for performing a functionality in accordance with a particular operation of the method 500, as shown in the flowchart of Figure 5A. For example, one such functional block 610a may be configured encode the video stream using a particular pattern (such as in operation S510). The block 610a may be referred to as an encoding block/module, encoder, and similar. Another block 610b may be configured to perform (as in operation S520) the determination that the second pattern performs better than the first pattern. The block 610b may be referred to as a determining or determination block/module, a determiner, and similar. Another block 610c may be configured to switch (as in operation S530) the first pattern with the second pattern, e.g. by providing instructions to the block 610a. The device 600 may optionally include e.g. one or more additional function blocks, such as one or more of blocks 610d and 610e, such as e.g. a block for detecting the lower than desirable performance of the first pattern (i.e. to implement operation S520 of the method 501), and/or to perform suboperations S522 and/or S523 (in case these suboperations are not already performed by block 610b), and similar.

In general terms, each functional block 610a-e may be implemented in hardware or in software. Preferably, one or more or all functional blocks 610a-e may be implemented by the processing circuitry 610, possibly in cooperation with the storage medium/memory 612 and/or the communications interface 616. The processing circuitry 610 may thus be arranged to from the memory 612 fetch instructions as provided by a functional block 610a-e, and to execute these instructions and thereby perform any operations of the method 500 or any embodiment thereof performed by/in the device 600 as disclosed herein.

Figure 7 schematically illustrates a computer program product 710 including a computer-readable means/storage medium 730. On the computer storage medium 730, a computer program 720 (including computer code) can be stored, which computer program 720 can cause (when the code is executed) the processor 610 and thereto operatively coupled entities and devices, such as the communications interface 616 and the memory 612, of the device 600 to execute method 500 and/or embodiments 501, 502 thereof described herein with reference to e.g. Figures 3A, 3B, 5A, 5B and 5C. The computer program 720 and/or computer program product 710 may thus provide means for performing any operations of the method 500 (or any embodiment thereof such as 501 and/or 502) performed by the device 600 as disclosed herein.

In the example of Figure 7, the computer program product 710 and computer-readable storage medium 730 are illustrated as an optical disc, such as a CD (compact disc) or a DVD (digital versatile disc) or a Blu-Ray disc. The computer program product 710 and computer-readable storage medium 730 could also be embodied as a memory, such as a random-access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 720 is here schematically shown as a track on the depicted optical disk, the computer program 720 maybe stored in any way which is suitable for the computer program product 710 and computer-readable storage medium 730.

In summary of all of the above, the present disclosure improves upon contemporary technology by providing a solution for adaptive intra refresh encoding of a video stream, in which such encoding is not locked to any particular intra refresh pattern but wherein the pattern may instead be changed dynamically depending on a current configuration and complexity-distribution of the scene. The envisaged solution proposes to evaluate whether there is another pattern that would/is performing better than the currently used pattern, and to switch to this pattern to improve time-variation of bits-per-frame, such as is important for low-latency applications/video monitoring. In some examples, such evaluation and switching may be triggered by first determining that the current pattern used to intra refresh encode the video stream is performing at a less than desirable level in terms of time-variation of bits-per-frame.

Although features and elements may be described above in particular combinations, each feature or element may be used alone without the other features and elements or in various combinations with or without other features and elements. Additionally, variations to the disclosed embodiments may be understood and effected by the skilled person in practicing the claimed invention, from a study of the drawings, the disclosure, and the appended claims.

In the claims, the words "comprising" and "including" does not exclude other elements, and the indefinite article "a" or "an" does not exclude a plurality. The mere fact that certain features are recited in mutually different dependent claims does not indicate that a combination of these features cannot be used to advantage.

## List of reference numerals

| 100, 101 | Video streams of scene |
|---|---|
| 110-1 to 110-4 | Video frames of video stream |
| 120 | Macroblocks |
| 130-1 to 130-4 | Rows of macroblocks |
| 132-1 to 132-4 | Columns of macroblocks |
| 200 | Example image of scene |
| 210, 212, 214, 216 | Scene/image regions of varying complexity |
| 220 | Macroblocks |
| 300, 301 | Plots of packet size versus video frame number |
| 400 | Image to be encoded |
| 410 | Intra refresh region |
| 420, 422 | Sweeping directions for intra refresh patterns |
| 500, 501, 502 | Methods for adaptive intra refresh encoding |
| S510, S520, S530 | Method operations |
| S512, S522, S523 | Optional method operations |
| 600 | Device |
| 610 | Processor/processing circuitry |
| 612 | Memory |
| 614 | Optional additional entities |
| 616 | Communications interface |
| 620 | Communications bus |
| 610a-610e | Functional blocks |
| 710 | Computer program product |
| 720 | Computer program |
| 730 | Computer-readable storage medium |
| $\theta$ | Pattern sweeping angle |
| R1 to R6 | Rows of macroblocks |
| C1 to C8 | Columns of macroblocks |
| P | Periodic length of oscillation |
| A | Amplitude of oscillation/time-variation of bits-per-frame |

## Claims

1. A method (500) for intra refresh encoding of a video stream, wherein the method comprises:

- encoding (S510) the video stream using a first intra refresh pattern;
- determining (S520) that a time-variation of bits-per-frame for encoding the video stream using a second intra refresh pattern different from the first intra refresh pattern is lower than that for encoding the video stream using the first intra refresh pattern, and
- switching (S530) to encoding the video stream using the second intra refresh pattern.

2. The method according to claim 1, wherein the first and second intra refresh pattern is a horizontal intra refresh pattern and a vertical intra refresh pattern, respectively, or vice versa.

3. The method according to claim 1 or 2, wherein the first and second intra refresh patterns are two opposite diagonal intra refresh patterns.

4. The method according to any one of claims 1 to 3, wherein the first and second intra refresh patterns are two orthogonal intra refresh patterns.

5. The method according to any one of the preceding claims, wherein the time-variation of bits-per-frame is defined in terms of a bits-per-frame variance, bits-per-frame standard deviation and/or bits-per-frame oscillation amplitude.

6. The method according to any one of the preceding claims, wherein the first and second intra refresh patterns form part of a plurality of different intra refresh patterns, and wherein said determining comprises evaluating (S522) the resulting time-variation of bits-per-frame for each intra refresh pattern of said plurality of intra refresh patterns.

7. The method according to claim 6, wherein the second intra refresh pattern is determined to be the intra refresh pattern out of the plurality of different intra refresh patterns that has a smallest time-variation of bits-per-frame for encoding the video stream.

8. The method according to any one of the preceding claims, wherein said switching is performed in response to said determining.

9. The method according to any one of the preceding claims, wherein said determining and switching is performed in response to detecting (S512) that the time-variation of bits-per-frame for encoding the video stream using the first intra refresh pattern exceeds a threshold value.

10. The method of claim 9, wherein said determining comprises evaluating (S523), in response to said detecting, the time-variation of bits-per-frame for each of the first and second intra refresh patterns during one or more finite time intervals, and wherein said determining is performed by detecting that the time-variation of bits-per-frame for the second intra refresh pattern is lower than that for the first intra refresh pattern during at least one of said one or more finite time intervals.

11. A device, comprising processing circuitry configured to:

- encode a video stream using a first intra refresh pattern;
- determine that a time-variation of bits-per-frame for encoding the video stream using a second intra refresh pattern different from the first intra refresh pattern is lower than that for encoding the video stream using the first intra refresh pattern, and
- switch to encoding the video stream using the second intra refresh pattern.

12. The device according to claim 11, wherein the device is a monitoring camera.

13. The device according to claim 11, wherein the device is a body-worn camera or a drone camera.

14. A computer program comprising computer code that, when run on processing circuitry of a device, causes the device to:

- encode a video stream using a first intra refresh pattern;
- determine that a time-variation of bits-per-frame for encoding the video stream using a second intra refresh pattern different from the first intra refresh pattern is lower than that for encoding the video stream using the first intra refresh pattern, and
- switch to encoding the video stream using the second intra refresh pattern.

15. A computer program product, comprising a computer-readable storage medium on which the computer program according to claim 14 is stored.

**Amended claims in accordance with Rule 137(2) EPC.**

1. A method (500) for intra refresh encoding of a video stream, wherein the method comprises:

- encoding (S510) the video stream using a first intra refresh pattern;
- determining (S520) that a time-variation of bits-per-frame for encoding the video stream using a second intra refresh pattern different from the first intra refresh pattern is lower than that for encoding the video stream using the first intra refresh pattern, and
- in response to said determining, switching (S530) to encoding the video stream using the second intra refresh pattern.

2. The method according to claim 1, wherein the first and second intra refresh pattern is a horizontal intra refresh pattern and a vertical intra refresh pattern, respectively, or vice versa.

3. The method according to claim 1 or 2, wherein the first and second intra refresh patterns are two opposite diagonal intra refresh patterns.

4. The method according to any one of claims 1 to 3, wherein the first and second intra refresh patterns are two orthogonal intra refresh patterns.

5. The method according to any one of the preceding claims, wherein the time-variation of bits-per-frame is defined in terms of a bits-per-frame variance, bits-per-frame standard deviation and/or bits-per-frame oscillation amplitude.

6. The method according to any one of the preceding claims, wherein the first and second intra refresh patterns form part of a plurality of different intra refresh patterns, and wherein said determining comprises evaluating (S522) the resulting time-variation of bits-per-frame for each intra refresh pattern of said plurality of intra refresh patterns.

7. The method according to claim 6, wherein the second intra refresh pattern is determined to be the intra refresh pattern out of the plurality of different intra refresh patterns that has a smallest time-variation of bits-per-frame for encoding the video stream.

8. The method according to any one of the preceding claims, wherein said determining and switching is performed in response to detecting (S512) that the time-variation of bits-per-frame for encoding the video stream using the first intra refresh pattern exceeds a threshold value.

9. The method of claim 8, wherein said determining comprises evaluating (S523), in response to said detecting, the time-variation of bits-per-frame for each of the first and second intra refresh patterns during one or more finite time intervals, and wherein said determining is performed by detecting that the time-variation of bits-per-frame for the second intra refresh pattern is lower than that for the first intra refresh pattern during at least one of said one or more finite time intervals.

10. A device (600), comprising processing circuitry (610) configured to:

- encode a video stream using a first intra refresh pattern;
- determine that a time-variation of bits-per-frame for encoding the video stream using a second intra refresh pattern different from the first intra refresh pattern is lower than that for encoding the video stream using the first intra refresh pattern, and
- in response to said determining, switch to encoding the video stream using the second intra refresh pattern.

11. The device according to claim 10, wherein the device is a monitoring camera.

12. The device according to claim 10, wherein the device is a body-worn camera or a drone camera.

13. A computer program (720) comprising computer code that, when run on processing circuitry (610) of a device (600), causes the device to:

- encode a video stream using a first intra refresh pattern;
- determine that a time-variation of bits-per-frame for encoding the video stream using a second intra refresh pattern different from the first intra refresh pattern is lower than that for encoding the video stream using the first intra refresh pattern, and
- in response to said determining, switch to encoding the video stream using the second intra refresh pattern.

14. A computer program product (710), comprising a computer-readable storage medium (730) on which the computer program (720) according to claim 13 is stored.

100

130-1

110-1  120

130-2

110-2

130-3

110-3

130-4

...

110-4

## Fig. 1A

101

132-1

110-1  120

132-2

110-2

132-3

110-3

132-4

...

110-4

## Fig. 1B

200

216

214

212

210

## Fig. 2A

Fig. 2B

Fig. 3A

Fig. 3B

*Fig. 4*

500

| S510 | Encode the video stream using first pattern |

↓

| S520 | Determine that the time-variation for a second, different pattern is lower than that of the first pattern |

↓

| S530 | Switch to encoding the video stream using the second pattern |

*Fig. 5A*

501

S510

⋮
↓

| S512 | Detect that the time-variation for the first pattern exceeds a threshold value |

⋮
↓

S520

*Fig. 5B*

502

S520

S522 — Select second pattern by evaluating the resulting time-variation for each of a plurality of different patterns

S523 — Evaluate each pattern during one or more finite time intervals

*Fig. 5C*

600

610    612

614    616    620

*Fig. 6A*

600

610a    610b    610c

610d    610e

*Fig. 6B*

710    720

730

*Fig. 7*

Europäisches
Patentamt

European
Patent Office

Office européen
des brevets

# EUROPEAN SEARCH REPORT

**Application Number**

EP 24 21 5031

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 040 234 A (BEIJING KINGSOFT CLOUD NETWORK TECHNIQUE CO LTD) 4 December 2020 (2020-12-04) * paragraph [0095] - paragraph [0098]; figure 2 * | 1-15 | INV. H04N19/107 H04N19/159 H04N19/176 |
| X | J-M THIESSE (VITEC) ET AL: "AHG14: Intra Refresh Test conditions and Anchors generation Proposal", 12. JVET MEETING; 20181003 - 20181012; MACAO; (THE JOINT VIDEO EXPLORATION TEAM OF ISO/IEC JTC1/SC29/WG11 AND ITU-T SG.16 ), , no. JVET-L0160 2 October 2018 (2018-10-02), XP030194295, Retrieved from the Internet: URL:http://phenix.int-evry.fr/jvet/doc_end _user/documents/12_Macao/wg11/JVET-L0160-v 2.zip JVET-L0160.docx [retrieved on 2018-10-02] * paragraph [0151] * | 1-15 | |
| X | US 2020/228823 A1 (YAMORI AKIHIRO [JP]) 16 July 2020 (2020-07-16) * paragraph [0058] * | 1-15 | TECHNICAL FIELDS SEARCHED (IPC)  H04N |
| A | WO 2020/188149 A1 (NOKIA TECHNOLOGIES OY [FI]) 24 September 2020 (2020-09-24) * the whole document * | 1-15 | |

The present search report has been drawn up for all claims

| Place of search | Date of completion of the search | Examiner |
|---|---|---|
| Munich | 13 May 2025 | Giuliani, Nicola |

EPO FORM 1503 03.82 (P04C01)

## ANNEX TO THE EUROPEAN SEARCH REPORT
## ON EUROPEAN PATENT APPLICATION NO.

EP 24 21 5031

13-05-2025

| Patent document cited in search report | | Publication date | Patent family member(s) | | Publication date |
|---|---|---|---|---|---|
| CN 112040234 | A | 04-12-2020 | NONE | | |
| US 2020228823 | A1 | 16-07-2020 | JP | 7284375 B2 | 31-05-2023 |
| | | | JP | 2020113923 A | 27-07-2020 |
| | | | US | 2020228823 A1 | 16-07-2020 |
| WO 2020188149 | A1 | 24-09-2020 | EP | 3942803 A1 | 26-01-2022 |
| | | | WO | 2020188149 A1 | 24-09-2020 |